(19) Europäisches Patentamt / European Patent Office / Office européen des brevets

(11) **EP 3 591 351 B1**

(12) **FASCICULE DE BREVET EUROPEEN**

(45) Date de publication et mention
de la délivrance du brevet:
**27.04.2022 Bulletin 2022/17**

(21) Numéro de dépôt: **19183535.4**

(22) Date de dépôt: **01.07.2019**

(51) Classification Internationale des Brevets (IPC):
*G01F 17/00* (2006.01)   *G01F 11/28* (2006.01)
*G01F 23/00* (2022.01)   *G01F 9/00* (2006.01)
*B60K 15/06* (2006.01)

(52) Classification Coopérative des Brevets (CPC):
**G01F 17/00; B60K 15/061; G01F 9/008;
G01F 23/80**

(54) **PROCÉDÉ D'ESTIMATION D'UNE QUANTITÉ DE CARBURANT RÉELLEMENT AJOUTÉE LORS D'UN PLEIN DANS UN RÉSERVOIR DE VÉHICULE**

VERFAHREN ZUM SCHÄTZEN DER TATSÄCHLICH ZUGEGEBENEN KRAFTSTOFFMENGE BEIM VOLLTANKENN EINES FAHRZEUGS

METHOD FOR ESTIMATING THE AMOUNT OF FUEL REALLY ADDED WHEN FILLING A VEHICLE TANK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.07.2018 FR 1856229**

(43) Date de publication de la demande:
**08.01.2020 Bulletin 2020/02**

(73) Titulaire: **IFP Energies nouvelles
92852 Rueil-Malmaison Cedex (FR)**

(72) Inventeur: **PERNET, Nicolas
92852 RUEIL-MALMAISON CEDEX (FR)**

(56) Documents cités:
**US-A1- 2010 185 360    US-A1- 2015 285 670
US-A1- 2016 258 377**

## Description

L'invention concerne le domaine des procédés et des dispositifs d'estimation d'une quantité de carburant ajoutée dans un réservoir d'un véhicule.

Les données de niveau de carburant sont des données accessibles via le système de diagnostic embarqué (ou OBD pour On-Board-Diagnostics en anglais) d'un véhicule et via un réseau de bus système série (notamment sur un réseau CAN pour Controller Area Network en anglais) du véhicule, sous réserve de connaitre la trame contenant cette information et la position dans la trame.

Ces informations sont notamment utilisées pour indiquer, à l'usager, sur un tableau de bord, le niveau de carburant de son véhicule. L'ajout d'un boitier télématique muni de solutions de communication (2G/3G/4G) sur une prise de diagnostic, permet de remonter, tout au cours de l'usage du véhicule, ces informations.

Néanmoins, ces données de niveau de carburant répondent à un besoin historique qui ne nécessite pas de grande précision. En effet l'usager s'intéresse d'abord au fait de savoir s'il devra « bientôt » faire le plein ou pas. En conséquence, la technologie utilisée, notamment en termes de capteur, n'a pas vocation à être précise mais plutôt économique.

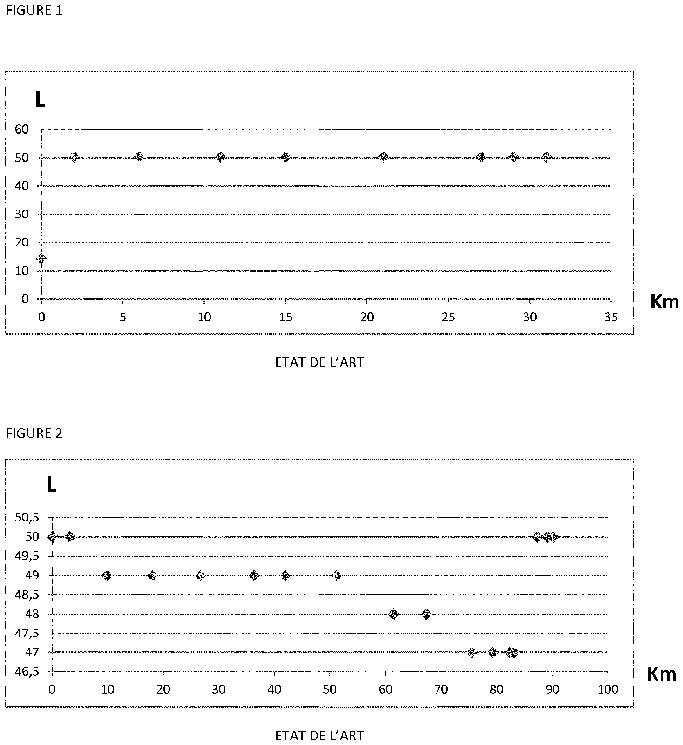

Les données remontées sont notamment imprécises lorsque le plein vient d'être fait. La Figure 1 est une figure de l'état de l'art et montre par exemple l'évolution du signal de niveau de carburant en litres en fonction des kilomètres parcourus dans des situations connues. Il est visible qu'un plein est fait au départ, faisant passer le niveau de carburant de 14,2 L à 50,3 L. Ce qui semble précis. Ce qui le semble moins, c'est qu'ensuite ce niveau reste constant pendant une trentaine de kilomètres. Il serait en effet surprenant qu'un véhicule à moteur thermique puisse rouler sur cette distance sans consommer au moins un litre de carburant.

L'exemple de la Figure 2 montre un autre profil d'enregistrement connu de l'état de l'art. Dans ce véhicule, la donnée de niveau de carburant remontée est un entier (au L). L'utilisateur a d'abord fait le plein jusqu'au « clic » du pistolet de la pompe, a roulé environ 80km et a ensuite refait le plein toujours jusqu'au « clic ». On voit que le niveau de carburant est pendant un certain temps à 50L puis va rester à 49L pendant une cinquantaine de km avant de décroitre de 2L en 20km. Suit une remontée du niveau à 50L consécutivement au plein qui est refait. Ce qui laisse à penser que l'usager a donc fait un plein de 3L. Or, dans ce cas d'usage, ce sont 7,4L qui ont été réellement ajoutés. Il y a donc un problème d'imprécision de la mesure puisqu'il n'est pas possible de détecter que le plein nécessaire est réellement de 7,4L. Un autre problème est que si l'usager n'avait remis que 3 L au deuxième plein, les valeurs reçues auraient été identiques et le système aurait détecté qu'un plein a effectivement été effectué.

Cet exemple est représentatif de la majorité des véhicules. En effet la première partie sur 0-55 km, sur laquelle le niveau de carburant est quasi constant se retrouve sur la plupart des véhicules. Cette partie, qui sera appelée « le plateau ou phase plateau», peut être vue comme une zone qui est le résultat du fait qu'un partie de la capacité du réservoir n'est pas « visible » par le capteur. Sur cette zone le capteur sature.

Un besoin de précision est néanmoins existant dans bien des cas et notamment chez les gestionnaires de flotte de type loueur de véhicule. Ce besoin n'est pas de savoir précisément le niveau de carburant dans le véhicule à l'instant t mais plutôt de savoir si les clients rendent bien le véhicule avec le plein de carburant, comme cela leur est demandé. Or, parfois ils s'en abstiennent ou le font plusieurs dizaines de km avant de rendre le véhicule : comme le contrôle est visuel (le salarié de l'agence monte dans le véhicule, met le contact et regarde le niveau de carburant sur le tableau de bord), il est possible de satisfaire cet indicateur sans pour autant rendre un véhicule possédant un plein complet.

Le document US4928657A décrit un dispositif pour connaitre le niveau de carburant. Cependant cette solution est une solution intrusive de mesure de niveau de carburant, qui nécessite l'ajout de capteurs ou de dispositifs dans le réservoir. Avec parfois la nécessité d'intégrer ce système à l'assemblage du véhicule. Ceci a l'inconvénient d'avoir un surcoût. La solution de la présente invention qui sera décrite par la suite n'ajoute pas de capteur supplémentaire dans la partie cachée du réservoir.

En outre d'autres documents, tel que le document EP2466278A1 ou le document US 20020194910A1, divulguent l'utilisation des données de consommation instantanée pour affiner le niveau de carburant observé par extrapolation. Cette méthode est appliquée pour rendre plus précises les données de ce qui peut être appelé une phase de consommation.

Le problème d'une telle méthode est qu'elle se base sur l'utilisation de la consommation instantanée qui est donnée par l'unité de contrôle du moteur constructeur et qui n'est pas forcément disponible sur tous les véhicules. En outre ces méthodes ont pour objectif de suivre le niveau dans le réservoir et non d'estimer une quantité de carburant ajoutée dans un réservoir d'un véhicule. Le document US 2016/258377 A1 divulgue un outil de diagnostic pour capteur de niveau de carburant, comprenant un outil d'intégration de la consommation en carburant, et une unité de correction capable de déterminer si le plein est total ou partiel.

Ce document vise à présenter une solution permettant de répondre aux problématiques soulevées ci-dessus en proposant un procédé et un dispositif de calcul qui met en œuvre un tel procédé et qui puisse détecter la quantité de carburant effectivement remis dans le réservoir lors d'un plein et cela sans l'utilisation de capteurs supplémentaires dans le réservoir de manière à être le plus économique et fiable possible.

Pour atteindre au moins les objectifs susvisés, parmi d'autres, la présente invention propose, selon un premier aspect, un procédé d'estimation d'une quantité de carburant réellement ajoutée $V_r$ lors d'un plein dans un réservoir de véhicule et l'invention se caractérise en ce que ladite estimation comprend au moins les étapes suivantes :

i) Une étape d'estimation (Evrmax) d'un volume ($Vr_{max}$) de carburant pouvant être remis dans le réservoir, ledit volume ($Vr_{max}$) étant estimé par une formule du type :

$$Vr_{max} = V_c + (N_p - N_a)$$

où $V_c$ est la capacité cachée du réservoir, $N_p$ le niveau de carburant sur une phase plateau et $N_a$ le niveau de carburant avant un plein ;
ii) Une étape de détermination (Dp) de la réalisation soit d'un plein complet (Pc), soit d'un plein partiel (Pp) ;
iii) Une étape d'estimation (Evr) de la quantité de carburant réellement ajoutée ($V_r$) donné par une formule du type :

$$N_p - N_a \leq V_r \leq V_c + (N_p - N_a)$$

pour le cas d'un plein complet (Pc) et par une formule du type :

$$V_r = N_r - N_a$$

pour le cas d'un plein partiel (Pp) avec $N_r$ qui est le niveau de carburant mesuré dans le réservoir après le plein partiel (Pp) et $N_r \leq N_p$.

Selon une caractéristique de l'invention, l'étape d'estimation (Evrmax) du volume ($Vr_{max}$) du carburant pouvant être remis dans le réservoir comprend une sous étape d'estimation (Evc) de la capacité cachée ($V_c$) du réservoir, ladite sous étape d'estimation (Evc) de la capacité cachée ($V_c$) du réservoir se fait en combinant une diminution théorique du niveau de carburant avec un niveau de carburant ($N_p$) observé et/ou mesuré sur une phase plateau et une phase consommation (C) qui suit la phase plateau.

Cette estimation peut être réalisée plusieurs fois sur un même véhicule de manière à être affinée.

Cette étape d'estimation va permettre après un ou plusieurs cycles de consommation et de pleins d'estimer le volume de carburant que peut contenir la partie cachée du réservoir. En d'autres termes, par recalage de la diminution théorique du niveau de carburant sur le niveau de carburant d'une phase plateau on peut reconstituer le niveau de la partie cachée du réservoir.

Selon une caractéristique de l'invention, l'étape de détermination (DP) de la réalisation d'un plein est effectuée par :

a) Une identification d'une croissance subite du niveau de carburant observé à l'issue d'une phase de consommation ou ;
b) Une identification d'une coupure d'un moteur du véhicule lors d'une phase où le carburant est à un niveau plateau ($N_p$).

Selon une caractéristique de l'invention, l'étape de détermination (Dp) de la réalisation soit d'un plein complet (Pc), soit d'un plein partiel (Pp) est effectuée par la mesure du niveau de carburant.

Selon une caractéristique de l'invention, le procédé comprend une étape d'estimation affinée (Ecra) de la quantité de carburant réellement ajoutée ($V_r$) dans le cas d'un plein complet (Pc) qui est donnée par une formule du type :

$$V_r = Vt + (N_p - Ni)$$

où Vt représente une consommation théorique pour une distance parcourue pendant une phase plateau qui suit un plein complet (Pc) et Ni représente le niveau de carburant.

Ainsi cette étape est réalisée en observant la distance parcourue en plateau qui suit le plein et en comparant la consommation théorique Vt sur ce même parcours à la capacité cachée Vc. En d'autres termes, une phase plateau plus courte indiquera que la capacité cachée du réservoir n'a pas été entièrement remplie.

Selon une caractéristique de l'invention, le procédé comprend une étape d'estimation d'une différence (diff) de niveau de carburant (EDD) entre deux dates (td, tf) qui est donnée par une formule du type :

$$diff = \Delta d - \Delta f$$

où $\Delta d$ est la différence entre le volume de carburant observé au temps td et le volume max et $\Delta f$ est la différence entre le volume de carburant observé au temps tf et le volume max

La présente invention propose, selon un deuxième aspect, un dispositif d'estimation de la capacité cachée d'un réservoir qui met en œuvre les étapes du procédé décrit précédemment.

**Présentation succincte des figures**

D'autres caractéristiques et avantages du procédé et du dispositif selon l'invention, apparaîtront à la lecture de la description ci-après d'un exemple non limitatif de réalisation, en se référant aux figures annexées et décrites ci-après.

La figure 1 illustre l'évolution du niveau de carburant en L sur un tableau de bord en fonction du nombre de kilomètres parcourus d'un premier dispositif de l'état de l'art ;

La figure 2 illustre l'évolution du niveau de carburant en L sur un tableau de bord en fonction du nombre de kilomètres parcourus d'un deuxième dispositif de l'état de l'art ;

La figure 3 représente les étapes du procédé selon l'invention ;

La figure 4 est un graphique des phases d'évolution du niveau de carburant détecté par un capteur de niveau en fonction du nombre de km parcourus dans le cadre de l'invention ;

La figure 5 est un graphique de reconstitution du niveau de carburant sur des phases plateau selon le procédé de l'invention ;

La figure 6 est un graphique d'estimation de la différence de niveau de carburant entre deux dates selon l'invention.

## Description détaillée de l'invention

La présente invention concerne un dispositif et un procédé associé qui permet d'estimer la quantité de carburant effectivement remis dans le réservoir ou d'estimer un différentiel de niveau de carburant pour un réservoir d'un véhicule afin de savoir si un plein a été complet ou non.

D'une manière générale et afin de réaliser ces objectifs, le procédé et le dispositif associé vont pouvoir :

- estimer une capacité cachée du réservoir, c'est-à-dire la capacité que la donnée de niveau de carburant ne voit pas, et ceci grâce à une estimation de la consommation cumulée grâce aux données acquises sur les trajets notamment la vitesse, le régime, la position, ou l'altitude, etc...
- détecter la réalisation d'un plein
- En fonction de l'existence et de la durée d'un plateau qui suit un plein et en utilisant l'estimation de la consommation cumulée, estimer la quantité de carburant ajoutée et donc savoir si le plein a été complet ou non.

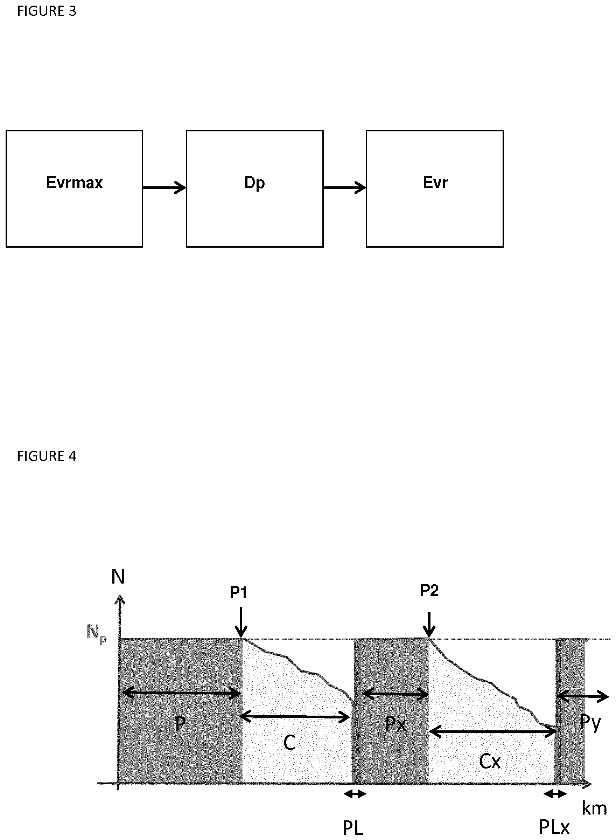

Selon l'invention et comme visible à la figure 3, le procédé d'estimation de la quantité de carburant réellement ajoutée ($V_r$) lors d'un plein dans un réservoir de véhicule va comprendre au moins les étapes suivantes :

i) Une étape d'estimation (Evrmax) d'un volume ($Vr_{max}$) de carburant pouvant être remis dans le réservoir, ledit volume ($Vr_{max}$) étant estimé par une formule du type :

$$Vr_{max} = V_c + (N_p - N_a)$$

où ($V_c$) étant la capacité cachée du réservoir, ($N_p$) le niveau de carburant plateau et ($N_a$) le niveau de carburant avant plein ;

ii) Une étape de détermination (Dp) de la réalisation soit d'un plein complet (Pc), soit d'un plein partiel (Pp) ;

iii) Une étape d'estimation (Evr) de la quantité de carburant réellement ajoutée ($V_r$) donné par une formule du type :

$$N_p - N_a \leq V_r \leq V_c + (N_p - N_a)$$

pour le cas d'un plein complet (Pc) et par une formule du type :

$$V_r = N_r - N_a$$

pour le cas d'un plein partiel (Pp).

Le niveau de carburant plateau $N_p$ est une donnée connue liée à la conception du réservoir de carburant et correspond à la valeur plateau lorsqu'un plein est réalisé.

Le niveau de carburant avant plein $N_a$ est une donnée mesurée.

Afin de réaliser cette estimation de la quantité de carburant réellement ajoutée ($V_r$), le procédé peut comprendre une sous étape d'estimation (Evc) de la capacité cachée ($V_c$) du réservoir.

Pour cela, il s'agira de :

- Suivre la consommation théorique du véhicule, à l'aide d'algorithmes d'estimation de la consommation prenant en compte la vitesse du véhicule, le régime moteur, l'altitude, la charge carburant et les caractéristiques du véhicule,
- Suivre les données remontées par un ou plusieurs capteurs de niveau de carburant.

Comme visible à la figure 4, qui représente les phases d'évolution du niveau de carburant observé, il est possible d'avoir, à l'aide d'un premier point (P1), une diminution théorique du niveau de carburant dans le réservoir en fonction du nombre de km parcourus. Les données d'un deuxième point (P2), également représentées en fonction du nombre de km, donnent le niveau de carburant observé.

Toujours en lien avec la figure 4, l'évolution du niveau de carburant connait trois types de phases :

- Une phase Plateau (P, Px, Py) qui est une phase durant laquelle le niveau de carburant semble constant ;
- Une phase Consommation (C, Cx, Cy) qui est une phase où le niveau de carburant décroit ;
- Une phase Plein (PL, PLx, PLy) qui est une phase où le niveau passe d'un niveau bas à un niveau haut.

Les points (P1) et (P2) sont positionnés où le niveau de carburant commence à baisser et indiquent ainsi la fin de la phase plateau (P) et le début de la phase consommation (C).

Les 3 phases se succèdent dans cet ordre si le plein est fait entièrement. Si le plein est incomplet, la phase plateau est raccourcie ou supprimée. Les différentes phases plateau (P, Px, Py) d'un véhicule indiquent toutes le même niveau de carburant Np.

L'estimation de la capacité cachée ($V_c$) se fait en prenant la diminution théorique du niveau de carburant dans la partie cachée du réservoir et le niveau de carburant observé sur une phase plateau (P, Px, Py) et la phase consommation (C, Cx, Cy) qui la suit. Il s'agit ensuite de recaler les données du premier sur le deuxième en minimisant l'erreur des données correspondant à la phase consommation (C, Cx, Cy) uniquement. Une fois cela réalisé, la différence entre les premiers points des deux courbes donne une estimation de la capacité cachée ($V_c$).

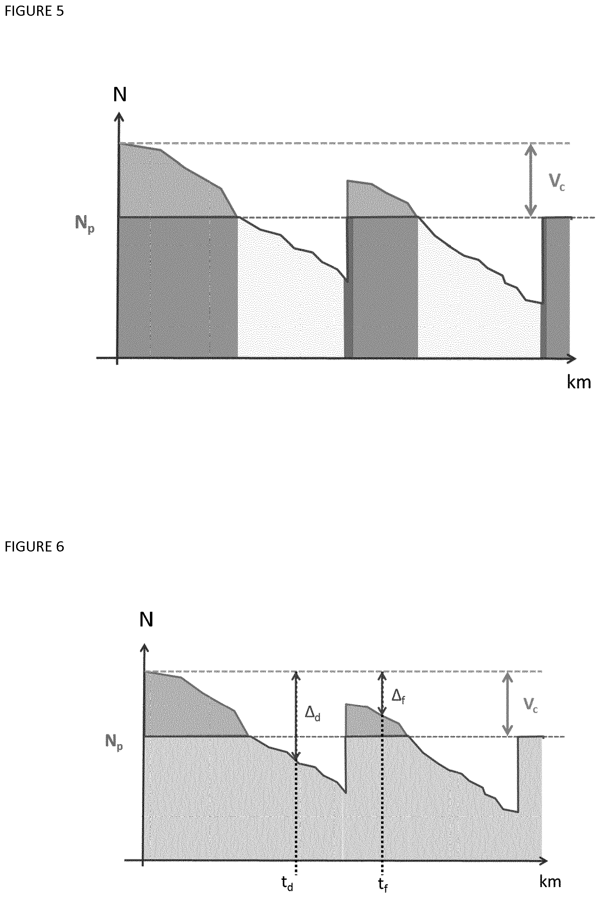

Comme visible sur la figure 5, la reconstitution du niveau de carburant sur les phases plateau (PL, PLx, PLy) est obtenue par recalage de la diminution théorique du niveau de carburant sur le niveau de carburant observé lors des phases (de type) plateau.

- Toujours afin de réaliser cette estimation de la quantité de carburant réellement ajoutée ($V_r$), le procédé comprend une étape d'estimation du volume ($Vr_{max}$) de carburant pouvant être remis.

Il est possible d'estimer le volume de carburant pouvant être remis ($Vr_{max}$) comme étant la somme de la capacité cachée du réservoir (Vc) et la différence entre le niveau de carburant plateau $N_p$ et un niveau de carburant avant plein $N_a$ par la formule suivante :

$$Vr_{max} = V_c + (N_p - N_a)$$

En cas d'identification d'un plein confirmé portant le niveau de carburant observé à un volume Vp (Vp étant le volume mis pour atteindre le niveau plateau $N_p$), si l'usager a fait le plein jusqu'à ce que la sécurité du pistolet à carburant se déclenche, $Vr_{max}$ sera une valeur proche du volume de carburant remis.

- Pour réaliser cette estimation de la quantité de carburant réellement ajoutée ($V_r$), le procédé va également comprendre une étape de détection (Dp) de la réalisation d'un plein.

Cela consiste à identifier la phase plein (PL, PLx, PLy) citée précédemment.

Il y a deux cas de figure :

- Un plein est dit confirmé s'il est identifié par une croissance subite du niveau de carburant observé à l'issue d'une phase consommation (C, Cx, Cy).
- Un plein est dit possible si on constate une coupure du moteur de courte durée, par exemple inférieure à 20 minutes, lors d'une phase plateau (PL, PLx, PLy).

Cet arrêt pourrait être l'occasion d'un plein de carburant. Ce comportement non conventionnel de l'usager, faisant le plein alors que le réservoir apparaît plein aux données tableau de bord, peut s'expliquer, dans le cas d'un véhicule loué, par le devoir de faire le plein même si seulement une trentaine de km a été parcourue.

En outre les pleins faits peuvent être des pleins partiels ou des pleins complets comme cela sera vu par la suite.

Estimation du volume de carburant réellement remis

Il convient de distinguer deux cas :

- La phase plein (PL, PLx, PLy) porte le niveau de carburant à un niveau inférieur à $N_p$ : il s'agit d'un plein partiel ;
- La phase plein (PL, PLx, PLy) porte le niveau de carburant à un niveau équivalent à $N_p$ : il s'agit d'un plein observé complet.

Dans le cadre du plein partiel, la meilleure estimation dans ce cas consiste à simplement prendre la différence entre le niveau de carburant observé avant le plein $N_a$, c'est-à-dire à la fin de la phase consommation et le nouveau niveau de carburant $N_r$ observé après le plein :

$$V_r = N_r - N_a$$

Dans le cadre du plein observé complet, l'estimation du volume de carburant réellement remis $V_r$ sera comprise entre le volume minimal permettant d'atteindre le niveau plateau (PL, PLx, PLy) de carburant observé et le volume de carburant pouvant être remis ($Vr_{max}$) :

$$N_p - N_a \leq V_r \leq V_c + (N_p - N_a)$$

Cette estimation peut être affinée en observant l'évolution du niveau de carburant observé durant les km parcourus après le plein.

- Selon un mode de réalisation de l'invention, le procédé selon l'invention peut également comprendre une étape d'estimation affinée du volume de carburant réellement remis $V_r$ par analyse de trajets ultérieurs.

Elle est réalisée en observant la distance parcourue en plateau qui suit le plein et comparant la consommation théorique $V_t$ sur ce même parcours à la capacité cachée $V_c$. En d'autres termes, une phase plateau plus courte indiquera que la capacité cachée du réservoir n'a pas été entièrement remplie. Il est donc possible d'affiner alors l'estimation du volume de carburant réellement remis dans le cas d'un plein observé complet :

$$V_r = V_t + (N_p - N_i)$$

$V_t$ représente ici la consommation théorique pour une distance parcourue pendant une phase plateau qui suit un plein complet (Pc) et Ni représente le niveau de carburant avant plein et est défini en litre comme l'ensemble des niveaux définis dans le document.

- En outre le procédé peut comprendre une étape d'estimation de la différence de niveau entre deux dates.

Cette étape est visible à la figure 6 qui représente une estimation de la différence de niveau entre deux dates par comparaison au volume max.

Pour évaluer cette différence (diff) entre la date de début td et la date de fin tf, le niveau à chaque date va d'abord être estimé :

- par rapport au plein qui précède (détection + estimation du volume remis par rapport au niveau plateau $N_p$)
- par rapport à la diminution théorique du niveau de carburant donnée par analyse des trajets postérieurs à ce plein jusqu'à la date visée.

Ce qui donnera pour chaque point une position ($\Delta$) par rapport au volume max du réservoir donné par $N_p + V_c$. Le surplus ou le défaut de carburant sera alors donné par :

$$\text{diff} = \Delta_d - \Delta_f$$

Le dispositif selon l'invention peut comprendre des moyens informatiques mettant en œuvre les étapes du procédé. Ces moyens informatiques peuvent être connectés aux capteurs présents sur le véhicule, notamment à un capteur de mesure de la quantité de carburant dans le réservoir.

Conformément à une mise en œuvre de l'invention, le dispositif et le procédé, peuvent comprendre en outre l'affichage de la valeur réellement ajoutée et/ou de la valeur de la quantité de carburant en temps réel. Cet affichage peut être réalisé sur le tableau de bord du véhicule, sur un téléphone intelligent de l'utilisateur, sur des moyens informatiques, notamment des moyens informatiques à disposition d'un gestionnaire de flotte de véhicules.

Comme il va de soi, l'invention ne se limite pas à la seule forme de réalisation du procédé décrit ci-dessus à titre d'exemple, elle embrasse au contraire toutes les variantes de réalisation.

En outre, le dispositif et le procédé selon l'invention sont adaptés à tous types de véhicules ; par exemple automobile, deux-roues, poids lourds, etc. Il peut s'agir de véhicules thermiques ou hybrides.

## Revendications

1. Procédé d'estimation d'une quantité de carburant réellement ajoutée ($V_r$) lors d'un plein dans un réservoir de véhicule, exécuté par un dispositif comprenant des moyens informatiques connectés aux capteurs présents sur le véhicule, notamment à un capteur de mesure de la quantité de carburant dans le réservoir, ladite estimation comprenant au moins les étapes suivantes :

   i) Une étape d'estimation (Evrmax) d'un volume ($Vr_{max}$) de carburant pouvant être remis dans le réservoir, ledit volume ($Vr_{max}$) étant estimé par une formule du type :

$$Vr_{max} = V_c + (N_p - N_a)$$

   où ($V_c$) est la capacité cachée du réservoir, ($N_p$) le niveau de carburant plateau et ($N_a$) le niveau de carburant avant plein, les niveaux, le volume $Vr_{max}$ et la capacité cachée $V_c$ étant exprimés en litres ;
   ii) Une étape de détermination (Dp) de la réalisation soit d'un plein complet (Pc), soit d'un plein partiel (Pp) ;
   iii) Une étape d'estimation (Evr) de la quantité de carburant réellement ajoutée ($V_r$) donné par une formule du type :

$$N_p - N_a \leq V_r \leq V_c + (N_p - N_a)$$

   pour le cas d'un plein complet (Pc) et par une formule du type :

$$V_r = N_r - N_a$$

   pour le cas d'un plein partiel (Pp), où Nr est le nouveau niveau de carburant mesuré dans le réservoir après le plein partiel (Pp) exprimé en litres, et **caractérisé en ce que** l'étape d'estimation (Evrmax) du volume ($Vr_{max}$) du carbu-

rant pouvant être remis dans le réservoir comprend une sous étape d'estimation (Evc) de la capacité cachée ($V_c$) du réservoir, ladite sous étape d'estimation (Evc) de la capacité cachée ($V_c$) du réservoir se fait en combinant une diminution théorique du niveau de carburant avec un niveau de carburant observé ($N_p$) et une phase consommation (C) qui suit la phase plateau (P), à l'aide d'algorithmes d'estimation de la consommation prenant en compte la vitesse du véhicule, le régime moteur, l'altitude, la charge carburant et les caractéristiques du véhicule.

2. Procédé selon la revendication 1, dans lequel l'étape de détermination (Dp) de la réalisation d'un plein est effectuée par :

a) Une identification d'une croissance subite du niveau de carburant observée à l'issue d'une phase de consommation (C) ou ;
b) Une identification d'une coupure d'un moteur du véhicule lors d'une phase où le carburant est à un niveau plateau (P).

3. Procédé selon la revendication 1, dans lequel l'étape de détermination (Dp) de la réalisation soit d'un plein complet (Pc), soit d'un plein partiel (Pp) est effectuée par la mesure du niveau de carburant.

4. Procédé selon la revendication 1 **caractérisé en ce qu'**il comprend une étape d'estimation affinée (Ecra) de la quantité de carburant réellement ajoutée ($V_r$) dans le cas d'un plein complet (Pc) qui est donnée par une formule du type :

$$V_r = V_t + (N_p - N_i)$$

où $V_t$ représente une consommation théorique pour une distance parcourue pendant une phase plateau qui suit un plein complet (Pc) et Ni représente le niveau de carburant avant plein et est défini en litre.

5. Procédé selon la revendication 1 **caractérisé en ce qu'**il comprend une étape d'estimation d'une différence (diff) de niveau de carburant (EDD) entre deux dates (td, tf) qui est donnée par une formule du type :

$$\text{diff} = \Delta_d - \Delta_f$$

où $\Delta_d$ est la différence entre le volume de carburant observé au temps td et le volume max et $\Delta f$ est la différence entre le volume de carburant observé au temps tf et le volume max

6. Dispositif d'estimation de la capacité cachée d'un réservoir comprenant des moyens informatiques pouvant être connectés aux capteurs présents sur le véhicule, et **caractérisé en ce qu'**il met en œuvre les étapes d'un procédé tel que revendiqué dans les revendications 1 à 5.

**Patentansprüche**

1. Verfahren zum Schätzen einer tatsächlich hinzugegebenen Kraftstoffmenge ($V_r$) beim Volltanken eines Fahrzeugtanks, das von einer Vorrichtung ausgeführt wird, die Computermittel umfasst, die mit den Sensoren verbunden sind, die am Fahrzeug vorhanden sind, insbesondere mit einem Sensor zur Messung der Kraftstoffmenge im Tank, wobei das Schätzen wenigstens die folgenden Schritte umfasst:

i) Einen Schritt des Schätzens (Evrmax) eines Kraftstoffvolumens ($Vr_{max}$), das in den Tank nachgefüllt werden kann, wobei das Volumen ($Vr_{max}$) durch eine Formel des folgenden Typs geschätzt wird:

$$Vr_{max} = V_c + (N_p - N_a)$$

wobei ($V_c$) die verborgene Kapazität des Tanks ist, ($N_p$) der Plateau-Kraftstoffstand ist und ($N_a$) der Kraftstoffstand vor dem Volltanken ist, wobei die Stände, das Volumen $Vr_{max}$ und die verborgene Kapazität $V_c$ in Litern ausgedrückt werden;
ii) Einen Schritt des Bestimmens (Dp) der Durchführung entweder eines vollständigen Volltankens (Pc) oder eines teilweisen Volltankens (Pp);
iii) Einen Schritt des Schätzens (Evr) der tatsächlich hinzugefügten Kraftstoffmenge ($V_r$), gegeben durch eine Formel des Typs:

$$N_p - N_a \leq V_r \leq V_c + (N_p - N_a)$$

für den Fall eines vollständigen Volltankens (Pc) und durch eine Formel des Typs:

$$V_r = N_r - N_a$$

für den Fall eines teilweisen Volltankens (Pp), wobei Nr der in Litern ausgedrückte neue Kraftstoffstand ist, der im Tank nach dem teilweisen Volltanken (Pp) gemessen wird, und **dadurch gekennzeichnet, dass** der Schritt des Schätzens (Evrmax) des Volumens ($Vr_{max}$) des Kraftstoffs, der in den Tank nachgefüllt werden kann, einen Unterschritt des Schätzens (Evc) der verborgenen Kapazität ($V_c$) des Tanks umfasst, wobei der Unterschritt des Schätzens (Evc) der verborgenen Kapazität ($V_c$) des Tanks durch Kombination einer theoretischen Abnahme des Kraftstoffstands mit einem beobachteten Kraftstoffstand ($N_p$) und einer Verbrauchsphase (C), die auf die Plateauphase (P) folgt, mithilfe von Algorithmen zum Schätzen des Verbrauchs unter Berücksichtigung der Geschwindigkeit des Fahrzeugs, der Motordrehzahl, der Höhe, der Kraftstoffladung und der Eigenschaften des Fahrzeugs erfolgt.

2. Verfahren nach Anspruch 1, wobei der Schritt des Bestimmens (Dp) der Durchführung eines Volltankens durch Folgendes durchgeführt wird:

a) Ein Feststellen eines plötzlichen Anstiegs des Kraftstoffstands, der nach einer Verbrauchsphase (C) beobachtet wird, oder;
b) Ein Feststellen eines Ausschaltens eines Motors des Fahrzeugs bei einer Phase, in der sich der Kraftstoff auf einem Plateau-Stand (P) befindet.

3. Verfahren nach Anspruch 1, wobei der Schritt des Bestimmens (Dp) der Durchführung entweder eines vollständigen Volltankens (Pc) oder eines teilweisen Volltankens (Pp) durch das Messen des Kraftstoffstands durchgeführt wird.

4. Verfahren nach Anspruch 1, **dadurch gekennzeichnet, dass** es einen Schritt des verfeinerten Schätzens (Ecra) der tatsächlich hinzugefügten Kraftstoffmenge ($V_r$) im Falle eines vollständigen Volltankens (Pc) umfasst, die durch eine Formel des folgenden Typs gegeben wird:

$$V_r = V_t + (N_p - N_i)$$

wobei $V_t$ einen theoretischen Verbrauch für eine Strecke repräsentiert, die während einer Plateauphase zurückgelegt wird, die auf ein vollständiges Volltanken (Pc) folgt, und Ni den Kraftstoffstand vor dem Volltanken repräsentiert und in Liter definiert ist.

5. Verfahren nach Anspruch 1 **dadurch gekennzeichnet, dass** es einen Schritt des Schätzens einer Differenz (diff) eines Kraftstoffstands (EDD) zwischen zwei Daten (td, tf) umfasst, die durch eine Formel des folgenden Typs gegeben wird:

$$\mathtt{diff} = \Delta_d - \Delta_f$$

wobei $\Delta_d$ die Differenz zwischen dem Kraftstoffvolumen, das zum Zeitpunkt td beobachtet wird, und dem Maximalvolumen ist und $\Delta_f$ die Differenz zwischen dem Kraftstoffvolumen, das zum Zeitpunkt tf beobachtet wird, und dem Maximalvolumen ist.

6. Vorrichtung zum Schätzen der verborgenen Kapazität eines Tanks, umfassend Computermittel, die mit den Sensoren verbunden werden können, die am Fahrzeug vorhanden sind, und **dadurch gekennzeichnet, dass** sie die Schritte eines Verfahrens nach den Ansprüchen 1 bis 5 umsetzt.

## Claims

1. Method for estimating the quantity of fuel actually added ($V_r$) when filling up a vehicle tank, carried out by a device comprising computer means connected to the sensors that are present on the vehicle, in particular a sensor for measuring the quantity of fuel in the tank, said estimation comprising at least the following steps:

i) a step of estimating (Evrmax) a volume ($Vr_{max}$) of fuel that can be put into the tank, said volume ($Vr_{max}$) being estimated using a formula of the type:

$$Vr_{max} = V_c + (N_p - N_a)$$

where ($V_c$) is the hidden capacity of the tank, ($N_p$) is the plateau level of fuel and ($N_a$) is the fuel level before filling up, the levels, the volume $Vr_{max}$ and the hidden capacity $V_c$ being expressed in litres;
ii) a step of determining (Dp) whether a complete fill-up (Pc) or a partial fill-up (Pp) is being carried out;
iii) a step of estimating (Evr) the quantity of fuel actually added ($V_r$), given by a formula of the type:

$$N_p - N_a \leq V_r \leq V_c + (N_p - N_a)$$

for the case of a complete fill-up (Pc) and by a formula of the type:

$$V_r = N_r - N_a$$

for the case of a partial fill-up (Pp), where Nr is the new level of fuel measured in the tank after the partial fill-up (Pp) expressed in litres, and **characterized in that** the step of estimating (Evrmax) the volume ($Vr_{max}$) of fuel

that can be put into the tank comprises a sub-step of estimating (Evc) the hidden capacity ($V_c$) of the tank, said sub-step of estimating (Evc) the hidden capacity ($V_c$) of the tank being carried out by combining a theoretical reduction in the level of fuel with an observed fuel level ($N_p$) and a consumption phase (C) which follows the plateau phase (P), with the aid of algorithms for estimating the consumption, taking into account the speed of the vehicle, the engine speed, the altitude, the fuel load and the characteristics of the vehicle.

2. Method according to Claim 1, wherein the step of determining (Dp) whether a fill-up is being carried out is effected by:

   a) identifying a sudden increase in the observed fuel level following a consumption phase (C); or
   b) identifying stopping of an engine of the vehicle during a phase in which the fuel is at a plateau level (P).

3. Method according to Claim 1, wherein the step of determining (Dp) whether a complete fill-up (Pc) or a partial fill-up (Pp) is being carried out is effected by measuring the fuel level.

4. Method according to Claim 1, **characterized in that** it comprises a step of making a refined estimation (Ecra) of the quantity of fuel actually added ($V_r$) in the case of a complete fill-up (Pc), which is given by a formula of the type:

$$V_r = V_t + (N_p - N_i)$$

where $V_t$ represents a theoretical consumption for a distance travelled during a plateau phase which follows a complete fill-up (Pc) and Ni represents the fuel level before a fill-up and is defined in litres.

5. Method according to Claim 1, **characterized in that** it comprises a step of estimating a difference (diff) in fuel level (EDD) between two dates (td, tf) which is given by a formula of the type:

$$diff = \Delta_d - \Delta_f$$

where $\Delta_d$ is the difference between the fuel volume observed at the time td and the max volume and $\Delta f$ is the difference between the fuel volume observed at the time tf and the max volume.

6. Device for estimating the hidden capacity of a tank, comprising computer means that can be connected to the sensors present on the vehicle, and **characterized in that** it implements a method as claimed in Claims 1 to 5.

FIGURE 1

ETAT DE L'ART

FIGURE 2

ETAT DE L'ART

FIGURE 3

FIGURE 4

FIGURE 5

FIGURE 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4928657 A
- EP 2466278 A1
- US 20020194910 A1
- US 2016258377 A1